# EUROPEAN PATENT SPECIFICATION

(11) **EP 2 624 622 B1**
(45) Date of publication and mention of the grant of the patent: **20.02.2019**
(21) Application number: 11837549.2
(22) Date of filing: 28.10.2011
(51) Int. Cl.: H04W 24/10, H04L 5/00, H04W 28/06, H04W 72/12

(54) **METHOD AND EQUIPMENT FOR SUBMITTING MULTI-CARRIER MEASUREMENT REPORT**
VERFAHREN UND VORRICHTUNG ZUR ÜBERMITTLUNG VON MEHRTRÄGER-MESSBERICHTEN
PROCÉDÉ ET ÉQUIPEMENT POUR SOUMETTRE UN RAPPORT DE MESURE DE PORTEUSES MULTIPLES

(30) Priority: 04.11.2010 CN 201010533003
(43) Date of publication of application: 07.08.2013
(73) Proprietor: Huawei Technologies Co., Ltd., Longgang District Shenzhen, Guangdong 518129 (CN)
(72) Inventor: LI, Bingzhao, Shenzhen Guangdong 518129 (CN); GUO, Xuanyu, Shenzhen Guangdong 518129 (CN); CHEN, Yanyan, Shenzhen Guangdong 518129 (CN)
(74) Representative: Goddar, Heinz J.
(86) International application number: PCT/CN2011/081463
(87) International publication number: WO 2012/059023

(56) References cited:
- EP-A1- 2 048 829
- EP-A1- 2 222 109
- EP-A2- 1 961 141
- WO-A1-2009/119565
- CN-A- 101 605 352
- CN-A- 101 610 536
- CN-A- 101 873 659
- NOKIA SIEMENS NETWORKS ET AL: "Measurements and carrier aggregation", 3GPP DRAFT; R2-100552 CA MEASUREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050421151, [retrieved on 2010-01-12]
- LG ELECTRONICS INC: "Measurement configuration structure for carrier aggregation", 3GPP DRAFT; R2-094966 MEASUREMENT CONFIGURATION STRUCTURE FOR CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352887, [retrieved on 2009-08-18]

## Description

### TECHNICAL FIELD

The present invention relates to the field of communications technologies, and in particular, to a method and a device for reporting measurement reports of multiple carriers.

### BACKGROUND

The multicarrier technology is a technology where data is sent to a UE (User Equipment, user equipment) through multiple carriers at the same time. It is widely used in WCDMA (Wideband Code Division Multiple Access, Wideband Code Division Multiple Access), CDMA2000 (Code Division Multiple Access, Code Division Multiple Access), and LTE (Long Term Evolution, Long Term Evolution). The UE working on multiple carriers may keep communication with the multiple carriers at the same time, and each of the carriers may have multiple cells used as macro diversity cells. In an uplink multicarrier system, the UE needs to maintain independent active sets on each of the carriers to ensure macro diversity handovers in each of the carriers.

Measurement is an important basis for detecting signal quality and performing a handover in mobile communications. A measurement procedure in mobile communications is divided into measurement control and measurement reporting. A network device configures a counter that needs to be measured and a measurement type during measurement control, for example, a measurement period and a threshold for triggering measurement. The UE performs measurement according to a measurement parameter configured by the network device and performs reporting to the network reports a measurement result to the network device by using a measurement report when a reporting condition is met.

For periodic measurement, the UE performs periodic reporting according to the period configured by the network device.

For event measurement, the network device needs to configure an event type, a hysteresis threshold, and hysteresis waiting time, and the UE reports a measurement report only after the hysteresis threshold and the hysteresis waiting time are met. For example, assume that the network device configures a 1A event (reporting is performed when a signal quality of a target cell is higher than a signal quality of a source cell); the UE waits a period of the hysteresis waiting time after measuring that a difference between the signal quality of the target cell is higher and the signal quality of the source cell reaches a hysteresis threshold; if the signal quality of the target cell is continuously higher than the signal quality of the source cell in this period of time, the UE reports a measurement report; and if a difference between the signal quality of the target cell and the signal quality of the source cell is lower than a specified threshold in the hysteresis waiting time, the UE quits reporting.

In multiple uplink carriers system, the UE needs to maintain multiple active sets. Maintenance of the active sets requires the UE to report a measurement report, and then the network device updates the active sets according to the measurement report. Maintenance of more active sets needs to consume more measurement reports and active set update signaling.

In this regard, EP 2 262 309 A1 teaches an event measurement method, where a transmission of a measurement report on a first frequency cell is delayed as long as a timer for measuring transmission quality of a second frequency cell having a higher priority than the first frequency cell is active, for promoting handover to the higher priority second frequency cell.

Furthermore, background information on carrier transmission quality measuring and reporting can be found in a 3GPP DRAFT of the TSG-RAN EG2 Meeting #68bis, held 18th to 22nd January 2010 in Spain, from Nokia Siemens Networks et al, entitled "Measurements and carrier aggregation".

Furthermore, EP 2 222 109 A1 discloses that a mobile station (UE) is configured to repeatedly transmit a first measurement report including a radio quality of a first cell and to repeatedly transmit a second measurement report including a radio quality of a second cell at the same timings, when the mobile station starts transmitting the first measurement report and thereafter starts transmitting the second measurement report.

### SUMMARY

The present invention provides a method for reporting measurement reports of multiple carriers to reduce the number of reported measurement reports during maintenance of multiple active sets according to claim 1.

Furthermore, a user equipment according to claim 5 is provided to reduce the number of reported measurement reports during maintenance of multiple active sets.

The embodiments and/or examples of the following description which are not covered by the appended claims are considered as not being part of the present invention. In embodiments of the present invention, it is determined that a first carrier and a second carrier enter hysteresis waiting for reporting measurement reports, and an expected reporting time point of a measurement report of the first carrier is earlier than that of a measurement report of the second carrier; the reporting time point of the measurement report of the first carrier and that of the measurement report of the second carrier are adjusted to a same time point; and the measurement report of the first carrier and that of the second carrier are reported at the same time point. Alternatively, it is determined that that a second carrier enters, after a reporting time point of a measurement report of a first carrier, hysteresis waiting for reporting a measurement report; and measurement-related information of the second carrier is reported when the measurement report of the first carrier is reported. In this way, it is unnecessary to separately report the measurement report of the second carrier, thereby relatively reducing the number of reported measurement reports during maintenance of multiple active sets.

In embodiments of the present invention, a network device can further send an indication indicating that a reporting time point of a measurement report is allowed to be adjusted, so that a user equipment adjusts a reporting time point of a measurement report of a first carrier and that of a measurement report of a second carrier to a same time point according to the indication indicating that a reporting time point of a measurement report is allowed to be adjusted. In this way, it is unnecessary to separately receive the measurement report of the second carrier reported by the user equipment, thereby relatively reducing the number of reported measurement reports during maintenance of multiple active sets.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from the accompanying drawings without creative efforts. In the drawings:
FIG. 1 is a schematic diagram of measurement reports that are reported synchronously according to an embodiment of the present invention;
FIG. 2 is a schematic diagram of measurement reports having independent hysteresis waiting time according to another embodiment of the present invention;
FIG. 3 is a schematic diagram of measurement reports having overlapped hysteresis waiting time according to another embodiment of the present invention;
FIG. 4 is a processing flowchart of a method for reporting measurement reports of multiple carriers according to another embodiment of the present invention;
FIG. 5 is a schematic diagram of lengthening hysteresis waiting time for reporting a measurement report of a first carrier;
FIG. 6 is a schematic diagram of resetting a hysteresis timer of a first carrier according to another embodiment of the present invention;
FIG. 7 is a schematic diagram of lengthening a timing length of a hysteresis timer of a first carrier;
FIG. 8 is a schematic diagram of shortening hysteresis waiting time for reporting a measurement report of a second carrier according to another embodiment of the present invention;
FIG. 9 is a processing flowchart of a method for reporting measurement reports of multiple carriers according to another embodiment of the present invention;
FIG. 10 is a processing flowchart of a method for reporting measurement reports of multiple carriers according to another embodiment of the present invention;
FIG. 11 is a schematic structural diagram of a user equipment according to another embodiment of the present invention;
FIG. 12 is a schematic structural diagram of a network device according to another embodiment of the present invention; and
FIG. 13 is a schematic structural diagram of a user equipment according to another embodiment of the present invention.

### DESCRIPTION OF EMBODIMENTS

To make the objectives, technical solutions, and advantages of the embodiments of the present invention more clearly, the following further describes the embodiments of the present invention in detail with reference to the accompanying drawings. The exemplary embodiments of the present invention and the description thereof are illustrative in nature, and shall not be construed as limitations on the present invention.

The embodiments and/or examples which are not covered by the claims are provided as competitive examples and not considered as being part of the present invention.

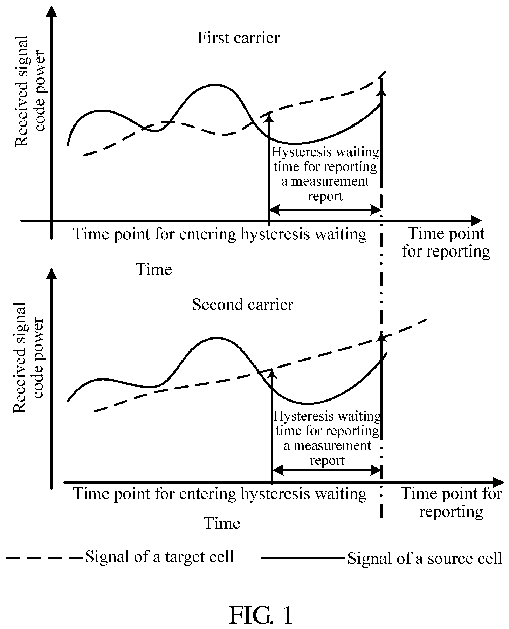

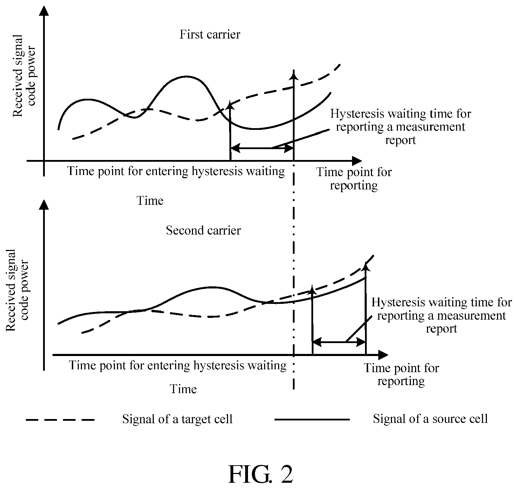

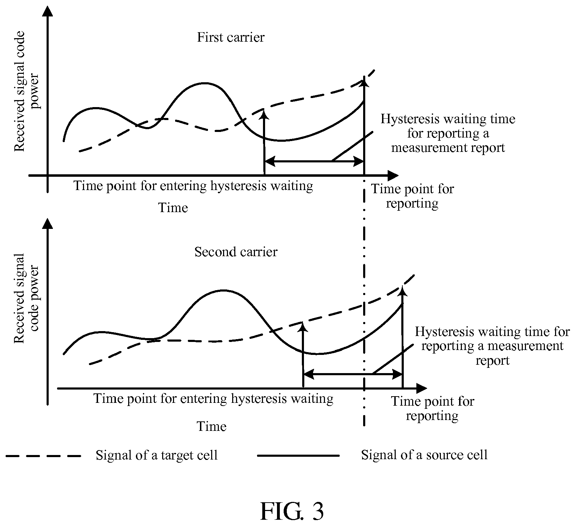

In the embodiments of the present invention, for ease of description, reporting of measurement reports of multiple carriers is classified into three cases according to reporting occasions of the measurement reports:
1. measurement reports that are reported synchronously. Multiple carriers enter, at a same time point, hysteresis waiting for reporting measurement reports and reach reporting time points of the measurement reports at the same time, as shown in FIG. 1 (taking two carriers as an example); alternatively, multiple carriers enter, at different time points, hysteresis waiting for reporting measurement reports, but reporting time points of the measurement reports are the same, which is because that a difference between time points at which the multiple carriers enter the hysteresis waiting for reporting measurement reports is just equal to a difference between timing lengths of hysteresis timers that are configured on each of the carriers;
2. measurement reports having independent hysteresis waiting time. Multiple carriers enter, at different time points, hysteresis waiting for reporting measurement reports and the hysteresis waiting time is not overlapped. That is, when a measurement report of a carrier is reported, other carriers do not enter the hysteresis waiting for reporting measurement reports, as shown in FIG. 2 (taking two carriers as an example); and
3. measurement reports having overlapped hysteresis waiting time. Multiple carriers enter, at different time points, hysteresis waiting for reporting measurement reports and it is calculated according to the hysteresis waiting time that the multiple carriers cannot reach reporting time points of the measurement reports at the same time, but the hysteresis waiting time is overlapped, as shown in FIG. 3 (taking two carriers as an example); alternatively, multiple carriers enter, at a same time point, hysteresis waiting for reporting measurement reports, but it is calculated according to the hysteresis waiting time that the multiple carriers cannot reach reporting time points of the measurement reports at the same time because timing lengths of hysteresis timers that are configured on each of the carriers are different.

Regarding the measurement reports having independent hysteresis waiting time and the measurement reports having overlapped hysteresis waiting time, reporting cannot be synchronously performed and multiple measurement reports may be sequentially reported because the reporting time points of the measurement reports of the multiple carriers are different.

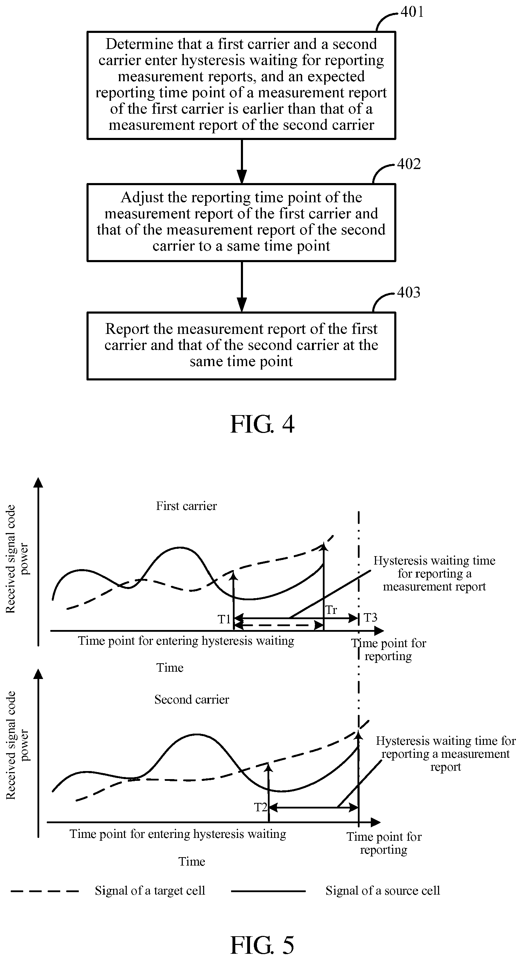

In view of this, regarding the measurement reports having overlapped hysteresis waiting time, an embodiment of the present invention provides a method for reporting measurement reports of multiple carriers to reduce the number of reported measurement reports during maintenance of multiple active sets. As shown in FIG. 4, a process of the method for reporting measurement reports of multiple carriers according to the embodiment of the present invention may be described as follows:
401. Determine that a first carrier and a second carrier enter hysteresis waiting for reporting measurement reports, and an expected reporting time point of a measurement report of the first carrier is earlier than that of a measurement report of the second carrier.

For example, the expected reporting time point is a time point when a hysteresis timer expires after the hysteresis waiting for reporting measurement reports is entered, where the time point is calculated according to hysteresis waiting time.

402. Adjust the reporting time point of the measurement report of the first carrier and that of the measurement report of the second carrier to a same time point.

403. Report the measurement report of the first carrier and that of the second carrier at the same time point.

As can be seen from the process illustrated in FIG. 4, in the embodiment of the present invention, it is determined that a first carrier and a second carrier enter hysteresis waiting for reporting measurement reports, and an expected reporting time point of a measurement report of the first carrier is earlier than that of a measurement report of the second carrier; the reporting time point of the measurement report of the first carrier and that of the measurement report of the second carrier are adjusted to a same time point; and the measurement report of the first carrier and that of the second carrier are reported at the same time point. In this way, it is unnecessary to separately report the measurement report of the second carrier, thereby relatively reducing the number of reported measurement reports during maintenance of multiple active sets.

During specific implementation, the method for reporting measurement reports of multiple carriers illustrated in FIG. 4 is applicable to reporting of measurement reports when multiple carriers exist, where the first carrier and the second carrier may be any carriers among the multiple carriers or any carriers among secondary carriers.

During specific implementation, in the method for reporting measurement reports of multiple carriers illustrated in FIG. 4, a specific processing method may be provided for measurement reports having overlapped hysteresis waiting time.

Specifically, multiple implementation manners may be available for adjusting the reporting time point of the measurement report of the first carrier and that of the measurement report of the second carrier to the same time point. For example, the reporting time point of the measurement report of the first carrier and that of the measurement report of the second carrier may be adjusted to the same time point by shortening the hysteresis waiting time for reporting the measurement report of the second carrier, so as to ensure that the measurement reports of the first carrier and the second carrier are reported at the same time.

Regarding lengthening the hysteresis waiting time for reporting the measurement report of the first carrier, an example is shown in FIG. 5. Assume that the first carrier enters, at time point T1, the hysteresis waiting for reporting the measurement report. According to a configuration of a hysteresis timer of the first carrier, the measurement report of the first carrier is reported at time point Tr. Within the hysteresis waiting time for reporting the measurement report of the first carrier, that is, before Tr, the second carrier also enters, at time point T2, the hysteresis waiting for reporting the measurement report. According to a configuration of a hysteresis timer of the second carrier, the measurement report of the second carrier is reported at time point T3. In this case, the hysteresis waiting time for reporting the measurement report of the first carrier is lengthened to ensure that the hysteresis waiting time for reporting the measurement report of the first carrier and that for reporting the measurement report of the second carrier end at time point T3 at the same time.

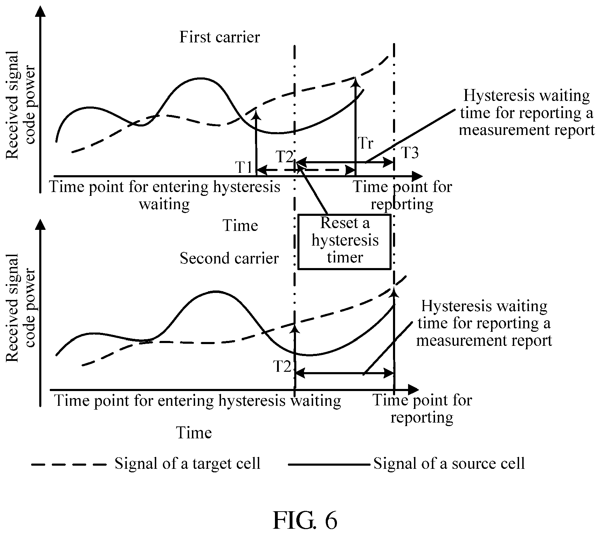

Multiple methods may be available for lengthening the hysteresis waiting time for reporting the measurement report of the first carrier. For example, if a timing length of the hysteresis timer of the first carrier is the same as that of the hysteresis timer of the second carrier, and the first carrier enters the hysteresis waiting for reporting the measurement report earlier than the second carrier, the hysteresis timer of the first carrier is reset when the second carrier enters the hysteresis waiting for reporting the measurement report. Taking FIG. 6 as an example, the hysteresis timer of the first carrier may be reset at time point T2. After the reset, timing of the hysteresis waiting time for reporting the measurement report of the first carrier is restarted. In this case, the timing lengths of the hysteresis timers of the first carrier and the second carrier are both from time point T2 to time point T3. It is equivalent to that the total hysteresis waiting time for reporting the measurement report of the first carrier is lengthened by a timing length of T3-Tr.

In an embodiment, the following condition needs to be met for resetting the hysteresis timer of the first carrier when the second carrier enters the hysteresis waiting for reporting the measurement report: The number of resets of the hysteresis timer of the first carrier does not exceed a maximum number of resets; and/or the hysteresis waiting time for reporting the measurement report of the first carrier does not exceed maximum reporting waiting time after the reset. Such implementation is based on a consideration that if signal quality of a certain carrier fluctuates relatively frequently, a hysteresis timer of this carrier may be reset repeatedly. Therefore, a limit of the maximum number of resets and/or a limit of the maximum reporting waiting time is considered to be set. If the number of resets of a hysteresis timer of a certain carrier exceeds the maximum number of resets, the hysteresis timer cannot be reset again. If total hysteresis waiting time for reporting a measurement report of a certain carrier exceeds the maximum reporting waiting time after the reset, the measurement report of the carrier is directly reported and a hysteresis timer of the carrier cannot be reset again.

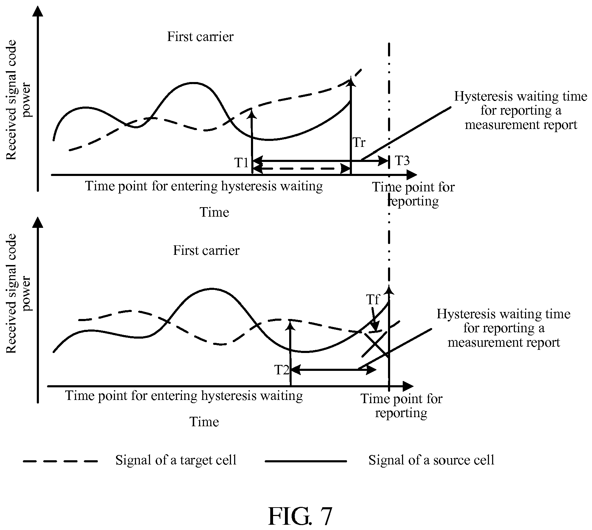

A method for lengthening the hysteresis waiting time for reporting the measurement report of the first carrier may exemplarily be lengthening the timing length of the hysteresis timer of the first carrier. Taking FIG. 7 as an example, the timing length of the hysteresis timer of the first carrier is directly lengthened. Before the lengthening, the timing length of the hysteresis timer of the first carrier is Tr - T1, after the lengthening, the timing length of the hysteresis timer of the first carrier is T3 - T1, and a timing length of T3-Tr is added in time.

In an embodiment, the following condition needs to be met for lengthening the timing length of the hysteresis timer of the first carrier: The timing length of the hysteresis timer of the first carrier is less than the maximum reporting waiting time after the lengthening; and/or after the timing length of the hysteresis timer of the first carrier is lengthened, the second carrier does not quit the hysteresis waiting for reporting the measurement report. Such implementation is based on a consideration that if signal quality of a certain carrier fluctuates relatively frequently, a timing length of a hysteresis timer of the carrier may be lengthened repeatedly, and as a result, a measurement report of the carrier always cannot be reported. Therefore, several solutions are provided. For example, the limit of the maximum reporting waiting time may be increased, and the hysteresis timer of the carrier can be lengthened only to the maximum reporting waiting time and cannot be lengthened further. For another example, after the hysteresis timer of the first carrier is lengthened, if the last carrier quits reporting before a measurement report is reported because of signal quality degrading, the timing length of the hysteresis timer of the first carrier is restored and lengthening is canceled.

Still taking FIG. 7 as an example, if after the timing length of the hysteresis timer of the first carrier is lengthened, the second carrier quits, at time point Tf, timing of the hysteresis waiting time for reporting the measurement report due to signal quality degrading, the timing length of the hysteresis timer of the first carrier will be shortened. If time point Tf is earlier than time point Tr, the timing length of the hysteresis timer of the first carrier is shortened to the timing length before the last lengthening. If time point Tf is latter than time point Tr, the timing length of the hysteresis timer of the first carrier is shortened to Tf - T1, that is, the measurement report of the first carrier is reported immediately.

Regarding adjusting the reporting time point of the measurement report of the first carrier and that of the measurement report of the second carrier to the same time point by shortening the hysteresis waiting time for reporting the measurement report of the second carrier, during specific implementation, a trigger for reporting the measurement report of the second carrier may be set to a triggered state at the reporting time point of the measurement report of the first carrier.

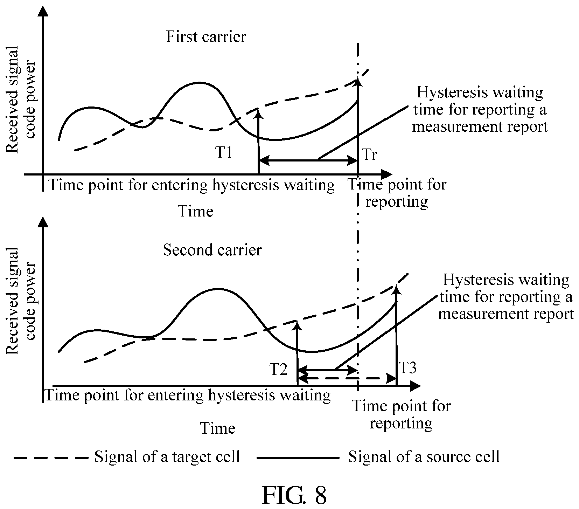

Taking FIG. 8 as an example, the first carrier enters, at time point T1, the hysteresis waiting for reporting the measurement report. According to the configuration of the hysteresis timer of the first carrier, the measurement report of the first carrier is reported at time point Tr. Within the hysteresis waiting time for reporting the measurement report of the first carrier, that is, before time point Tr, the second carrier also enters, at time point T2, the hysteresis waiting for reporting the measurement report. According to the configuration of the hysteresis timer of the second carrier, the measurement report of the second carrier is reported at time point T3. When time point Tr arrives, if the second carrier is still in the phase of the hysteresis waiting time for reporting the measurement report, the trigger for reporting the measurement report of the second carrier is set to the triggered state. In this case, it is equivalent to that the hysteresis waiting time for reporting the measurement report of the second carrier is shortened to ensure that the hysteresis waiting time for reporting the measurement report of the first carrier and that for reporting the measurement report of the second carrier end at time point Tr at the same time.

During specific implementation, it may be indicated, when the measurement report of the first carrier and that of the second carrier are reported, that the measurement report of the second carrier is a measurement report that is reported in advance. The timing of the hysteresis timer of the second carrier may also end when the measurement report of the first carrier and that of the second carrier are reported.

In an embodiment, the following condition needs to be met for setting the trigger for reporting the measurement report of the second carrier to the triggered state at the reporting time point of the measurement report of the first carrier: The hysteresis waiting time for reporting the measurement report of the second carrier is greater than minimum reporting waiting time. During implementation, the minimum reporting waiting time is set. If the hysteresis waiting time for reporting the measurement report of the second carrier is greater than the minimum reporting waiting time when the measurement report of the first carrier is reported, the measurement report of the second carrier is reported; otherwise, the measurement report of the second carrier is not reported.

In addition, at a network side, whether a UE (user equipment) is allowed to jointly report measurement reports by adjusting reporting time points of the measurement reports may be configured in measurement control. This allowing indication may be separately configured regarding each measurement event and may also be configured regarding all events.

During specific implementation, the user equipment receives an indication that is sent by the network and indicates that a reporting time point of a measurement report is allowed to be adjusted, and adjusts the reporting time point of the measurement report of the first carrier and that of the measurement report of the second carrier to the same time point according to the indication indicating that a reporting time point of a measurement report is allowed to be adjusted.

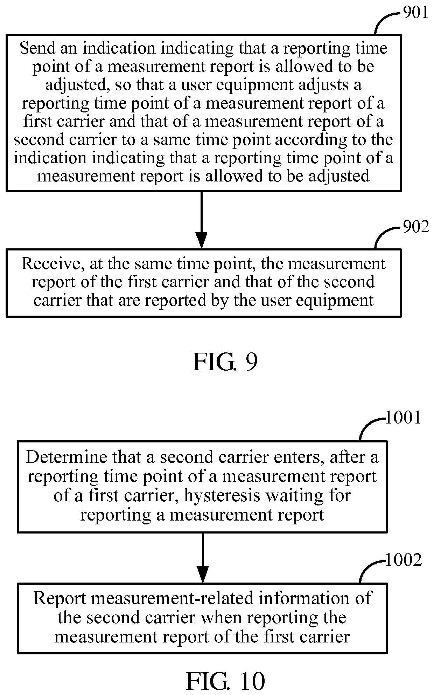

Based on this, an embodiment of the present invention further provides a method for reporting measurement reports of multiple carriers. Its process is shown in FIG. 9.

901. Send an indication indicating that a reporting time point of a measurement report is allowed to be adjusted, so that a user equipment adjusts a reporting time point of a measurement report of a first carrier and that of a measurement report of a second carrier to a same time point according to the indication indicating that a reporting time point of a measurement report is allowed to be adjusted, where the first carrier and the second carrier enter hysteresis waiting for reporting measurement reports, and an expected reporting time point of the measurement report of the first carrier is earlier than that of the measurement report of the second carrier.

902. Receive, at the same time point, the measurement report of the first carrier and that of the second carrier that are reported by the user equipment.

In the process illustrated in FIG. 9, a network device sends an indication indicating that a reporting time point of a measurement report is allowed to be adjusted, so that a user equipment adjusts a reporting time point of a measurement report of a first carrier and that of a measurement report of a second carrier to a same time point according to the indication indicating that a reporting time point of a measurement report is allowed to be adjusted. In this way, it is unnecessary to separately receive the measurement report of the second carrier reported by the user equipment, thereby relatively reducing the number of reported measurement reports during maintenance of multiple active sets.

In an embodiment of the present invention, regarding measurement reports having independent hysteresis waiting time, a method for reporting measurement reports of multiple carriers is provided, as shown in FIG. 10.
1001. Determine that a second carrier enters, after a reporting time point of a measurement report of a first carrier, hysteresis waiting for reporting a measurement report.
1002. Report measurement-related information of the second carrier when reporting the measurement report of the first carrier.

After the process illustrated in FIG. 10 is performed, a network updates an active set of the second carrier at the same time of updating an active set of the first carrier. Afterward, it may be unnecessary to separately report the measurement report of the second carrier.

During specific implementation, when the measurement report of the first carrier is reported, one or any combination of the following information may be selected as the measurement-related information of the second carrier according to a type of an event for reporting the measurement report of the first carrier:
signal quality of a cell in a monitoring set on the second carrier;
signal quality of a cell in an active set on the second carrier;
signal quality of a cell in a detection set on the second carrier;
signal quality of an optimum neighboring cell among intra-frequency neighboring cells that are not in the active set of the second carrier on the second carrier;
signal weight quality of a cell in the active set of the second carrier, where for weight calculation, reference may be made to weight calculation of 1A, 1B, or 1C in the 3GPP TS25.331 protocol;
signal quality of a cell that has signal quality higher than a first predetermined threshold and is included in a first predetermined set on the second carrier; and
signal quality of a cell that has signal quality lower than a second predetermined threshold and is included in a second predetermined set on the second carrier.

The first predetermined threshold and the second predetermined threshold may be signal weight quality of cells in the active set of the second carrier or threshold values configured by a network device.

The first predetermined set and the second predetermined set may include one or any combination of the active set of the second carrier, the detection set of the second carrier, and the monitoring set of the second carrier.

A measurement counter specifically reported by a UE needs to be selected according to the type of the event for reporting the measurement report of the first carrier. For example, if the type of the event for reporting the measurement report of the first carrier is 1A, information simultaneously reported by the second carrier is signal quality of an optimum neighboring cell among intra-frequency neighboring cells that are not in the active set of the second carrier on the second carrier, or signal quality of a cell in the monitoring set of the second carrier and signal quality of a cell in the active set of the second carrier.

The network device, such as an RNC (Radio Network Controller, radio network controller), may update the active sets of the first carrier and the second carrier with reference to the preceding information. For example, the first carrier reports 1A to notify the RNC that signal quality of a neighboring cell Cell12 is higher than the average signal quality of the active set and simultaneously notify that the optimum neighboring cell on the second carrier is Cell22. In addition, the RNC determines that Cell12 and Cell22 are inter-frequency cells with the same coverage according to the reported information indicating that signal quality of Cell22 approximates to the average signal quality of the active set of the second carrier. In this case, Cell 12 and Cell22 are added to active sets of respective carriers during an update of the active sets.

Based on the same inventive idea, embodiments of the present invention further provide a user equipment and a network device, as described in the following embodiments. Principles for the user equipment and the network device to solve problems are similar to the method for reporting measurement reports of multiple carriers. Therefore, for implementation of the user equipment and the network device, reference may be made to the implementation of the method for reporting measurement reports of multiple carriers. Repeated information is not provided herein.

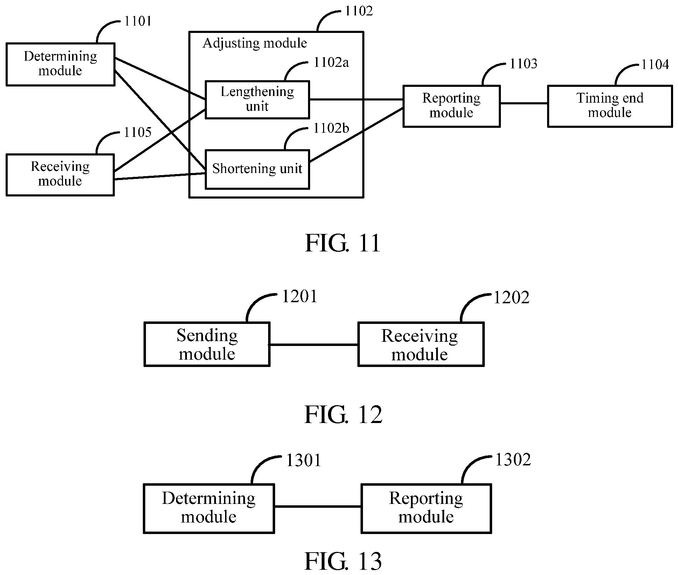

As shown in FIG. 11, a user equipment in an embodiment of the present invention may include a determining module 1101, an adjusting module 1102, and a reporting module 1103.

The determining module 1101 is configured to determine that a first carrier and a second carrier enter hysteresis waiting for reporting measurement reports, and an expected reporting time point of a measurement report of the first carrier is earlier than that of a measurement report of the second carrier.

The adjusting module 1102 is configured to adjust the reporting time point of the measurement report of the first carrier and that of the measurement report of the second carrier to a same time point.

The reporting module 1103 is configured to report the measurement report of the first carrier and that of the second carrier at the same time point.

In an embodiment, the adjusting module 1102 illustrated in FIG. 11 may include a lengthening unit 1102a or a shortening unit 1102b.

The lengthening unit 1102a is configured to adjust the reporting time point of the measurement report of the first carrier and that of the measurement report of the second carrier to the same time point by lengthening hysteresis waiting time for reporting the measurement report of the first carrier.

The shortening unit 1102b is configured to adjust the reporting time point of the measurement report of the first carrier and that of the measurement report of the second carrier to the same time point by shortening hysteresis waiting time for reporting the measurement report of the second carrier.

In an embodiment, if a timing length of a hysteresis timer of the first carrier is the same as that of a hysteresis timer of the second carrier and the first carrier enters hysteresis waiting for reporting the measurement report earlier than the second carrier, the lengthening unit 1102a may specifically be configured to reset the hysteresis timer of the first carrier when the second carrier enters hysteresis waiting for reporting the measurement report.

Alternatively, the lengthening unit 1102a may specifically be configured to lengthen the timing length of the hysteresis timer of the first carrier.

In an embodiment, the following condition is met for the lengthening unit 1102a to reset the hysteresis timer of the first carrier when the second carrier enters the hysteresis waiting for reporting the measurement report: The number of resets of the hysteresis timer of the first carrier does not exceed a maximum number of resets; and/or the hysteresis waiting time for reporting the measurement report of the first carrier does not exceed maximum reporting waiting time after the reset.

In an embodiment, the following condition is met for the lengthening unit 1102a to lengthen the timing length of the hysteresis timer of the first carrier: The timing length of the hysteresis timer of the first carrier is less than the maximum reporting waiting time after the lengthening; and/or the second carrier does not quit the hysteresis waiting for reporting the measurement report after the timing length of the hysteresis timer of the first carrier is lengthened.

In an embodiment, the shortening unit 1102b may specifically be configured to set a trigger for reporting the measurement report of the second carrier to a triggered state at the reporting time point of the measurement report of the first carrier.

In an embodiment, the reporting module 1103 may be further configured to indicate, when the measurement report of the first carrier and that of the second carrier are reported, that the measurement report of the second carrier is a measurement report that is reported in advance.

In an embodiment, the user equipment in FIG. 11 may further include a timing end module 1104, configured to end timing of the hysteresis timer of the second carrier when the reporting module 1103 reports the measurement report of the first carrier and that of the second carrier.

In an embodiment, the following condition is met for the shortening unit 1102b to set the trigger for reporting the measurement report of the second carrier to the triggered state at the reporting time point of the measurement report of the first carrier: The hysteresis waiting time for reporting the measurement report of the second carrier is greater than minimum reporting waiting time.

In an embodiment, the user equipment in FIG. 11 may further include a receiving module 1105, configured to receive an indication that is sent by a network and indicates that a reporting time point of a measurement report is allowed to be adjusted.

The adjusting module 1102 may specifically be configured to adjust the reporting time point of the measurement report of the first carrier and that of the measurement report of the second carrier to the same time point according to the indication indicating that a reporting time point of a measurement report is allowed to be adjusted.

As shown in FIG. 12, a network device in an embodiment of the present invention may include a sending module 1201 and a receiving module 1202.

The sending module 1201 is configured to send an indication indicating that a reporting time point of a measurement report is allowed to be adjusted, so that a user equipment adjusts a reporting time point of a measurement report of a first carrier and that of a measurement report of a second carrier to a same time point according to the indication indicating that a reporting time point of a measurement report is allowed to be adjusted, where the first carrier and the second carrier enter hysteresis waiting for reporting measurement reports, and an expected reporting time point of the measurement report of the first carrier is earlier than that of the measurement report of the second carrier.

The receiving module 1202 is configured to receive, at the same time point, the measurement report of the first carrier and that of the second carrier that are reported by the user equipment.

As shown in FIG. 13, a user equipment in an embodiment of the present invention may include a determining module 1301 and a reporting module 1302.

The determining module 1301 is configured to determine that a second carrier enters, after a reporting time point of a measurement report of a first carrier, hysteresis waiting for reporting a measurement report.

The reporting module 1302 is configured to report measurement-related information of the second carrier when reporting the measurement report of the first carrier.

One or any combination of the following information is selected as the measurement-related information of the second carrier according to a type of an event for reporting the measurement report of the first carrier:
signal quality of a cell in a monitoring set on the second carrier;
signal quality of a cell in an active set on the second carrier;
signal quality of a cell in a detection set on the second carrier;
signal quality of an optimum neighboring cell among intra-frequency neighboring cells that are not in the active set of the second carrier on the second carrier;
signal weight quality of a cell in the active set of the second carrier;
signal quality of a cell that has signal quality higher than a first predetermined threshold and is included in a first predetermined set on the second carrier; and
signal quality of a cell that has signal quality lower than a second predetermined threshold and is included in a second predetermined set on the second carrier.

In an embodiment, the first predetermined threshold and the second predetermined threshold may be signal weight quality of cells in the active set of the second carrier or threshold values configured by the network device.

In an embodiment, the first predetermined set and the second predetermined set may include one or any combination of the active set of the second carrier, the monitoring set of the second carrier, and the detection set of the second carrier.

In conclusion, in the embodiment of the present invention, it is determined that a first carrier and a second carrier enter hysteresis waiting for reporting measurement reports, and an expected reporting time point of a measurement report of the first carrier is earlier than that of a measurement report of the second carrier; the reporting time point of the measurement report of the first carrier and that of the measurement report of the second carrier are adjusted to a same time point; and the measurement report of the first carrier and that of the second carrier are reported at the same time point. Alternatively, it is determined that that a second carrier enters, after a reporting time point of a measurement report of a first carrier, hysteresis waiting for reporting a measurement report; and measurement-related information of the second carrier is reported when the measurement report of the first carrier is reported. In this way, it is unnecessary to separately report the measurement report of the second carrier, thereby relatively reducing the number of reported measurement reports during maintenance of multiple active sets.

In the embodiment of the present invention, a network device further sends an indication indicating that a reporting time point of a measurement report is allowed to be adjusted, so that a user equipment adjusts a reporting time point of a measurement report of a first carrier and that of a measurement report of a second carrier to a same time point according to the indication indicating that a reporting time point of a measurement report is allowed to be adjusted. In this way, it is unnecessary to separately receive the measurement report of the second carrier reported by the user equipment, thereby relatively reducing the number of reported measurement reports during maintenance of multiple active sets.

Persons skilled in the art should understand that embodiments of the present invention may be implemented by a method, a system, or a computer program product. Therefore, the present invention may take the form of an entire hardware embodiment, an entire software embodiment, or an embodiment combining software and hardware aspects. In addition, the present invention may take the form of a computer program product that is implemented on one or more computer-usable storage media (including but not limited to a disk memory, a CD-ROM, and an optical memory) containing computer-usable program codes.

The present invention is described with reference to the flowcharts and/or block diagrams of the method, the device (system), and the computer program product according to the embodiments of the present invention. It should be understood that computer program instructions may be used to implement each process and/or block in the flowcharts and/or the block diagrams, and a combination of processes and/or blocks in the flowcharts and/or the block diagrams. These computer program instructions may be provided to a processor of general computer, a dedicated computer, an embedded processor, or another programmable data processing device to generate a machine, so that an instruction executed by the processor of the computer or the another programmable data processing device is used to generate an apparatus for implementing a specified function in one or more processes in the flowcharts and/or one or more blocks in the block diagrams.

Theses computer program instructions may also be stored in a computer-readable memory that guides a computer or another programmable data processing device in working in a particular manner, so that an instruction stored in the computer-readable memory is used to generate a product including an instruction apparatus. The instruction apparatus implements a specified function in one or more processes in the flowcharts and/or one or more blocks in the block diagrams.

These computer program instructions may also be loaded to a computer or another programmable data processing device, so that a series of operation steps are performed on the computer and the another programmable device to generate processing implemented by the computer. In this way, an instruction executed on the computer or another programmable device provides a step for implementing a specified function in one or more processes in the flowcharts and/or one or more blocks in the block diagrams.

The foregoing described specific embodiments further describe the objectives, technical solutions and benefits of the present invention in detail. It is understandable that the foregoing descriptions are merely specific embodiments of the present invention, but are not intended to limit the protection scope of the present invention.

## Claims

1. A method, performed by a user of a cellular network, for reporting measurement reports of multiple carriers, **characterized in** comprising:
determining (401) that a first carrier and a second carrier enter hysteresis waiting for reporting measurement reports, and an expected reporting time point of a measurement report of the first carrier is earlier than that of a measurement report of the second carrier, wherein the expected reporting time point is a time point when a hysteresis timer expires after the hysteresis waiting for reporting measurement reports is entered, where the time point is calculated according to hysteresis waiting time;
adjusting (402) the reporting time point of the measurement report of the first carrier and that of the measurement report of the second carrier to a same time point by shortening hysteresis waiting time for reporting the measurement report of the second carrier; and
reporting (403) the measurement report of the first carrier and that of the second carrier at the same time point,
**characterized in that** the shortening hysteresis waiting time for the reporting the measurement report of the second carrier comprises:
setting a trigger for reporting the measurement report of the second carrier to a triggered state at the reporting time point of the measurement report of the first carrier, and
wherein the method further comprises:
indicating, when the measurement report of the first carrier and that of the second carrier are reported, that the measurement report of the second carrier is a measurement report that is reported in advance of the expected reporting time point.

2. The method according to claim 1, further comprising:
ending timing of a hysteresis timer of the second carrier when the measurement report of the first carrier and that of the second carrier are reported.

3. The method according to claim 1, wherein the following condition is met for the setting the trigger for the reporting the measurement report of the second carrier to the triggered state at the reporting time point of the measurement report of the first carrier:
the hysteresis waiting time for reporting the measurement report of the second carrier is greater than minimum reporting waiting time.

4. The method according to any one of claims 1 to 3, further comprises:
receiving an indication that is sent by a network and indicates that a reporting time point of a measurement report is allowed to be adjusted; and
the adjusting the reporting time point of the measurement report of the first carrier and that of the measurement report of the second carrier to a same time point comprises:
adjusting the reporting time point of the measurement report of the first carrier and that of the measurement report of the second carrier to the same time point according to the indication indicating that a reporting time point of a measurement report is allowed to be adjusted.

5. A user equipment of a cellular network **characterized in** comprising:
a determining module (1101), configured to determine that a first carrier and a second carrier enter hysteresis waiting for reporting measurement reports, and an expected reporting time point of a measurement report of the first carrier is earlier than that of a measurement report of the second carrier, wherein the expected reporting time point is a time point when a hysteresis timer expires after the hysteresis waiting for reporting measurement reports is entered, where the time point is calculated according to hysteresis waiting time;
an adjusting module (1102), configured to adjust the reporting time point of the measurement report of the first carrier and that of the measurement report of the second carrier to a same time point;
a reporting module (1103), configured to report the measurement report of the first carrier and that of the second carrier at the same time point; and
a shortening unit (1102b), configured to adjust the reporting time point of the measurement report of the first carrier and that of the measurement report of the second carrier to the same time point by shortening hysteresis waiting time for reporting the measurement report of the second carrier,
**characterized in that** the shortening unit (1102b) is specifically configured to:
set a trigger for reporting the measurement report of the second carrier to a triggered state at the reporting time point of the measurement report of the first carrier,
wherein the reporting module (1103) is further configured to:
indicate, when the measurement report of the first carrier and that of the second carrier are reported, that the measurement report of the second carrier is a measurement report that is reported in advance of the expected reporting time point.

6. The user equipment according to claim 5, wherein further comprising:
a timing end module (1104), configured to end timing of the hysteresis timer of the second carrier when the reporting module reports the measurement report of the first carrier and that of the second carrier.

7. The user equipment according to claim 5, wherein the following condition is met for the shortening unit to set a trigger for reporting the measurement report of the second carrier to a triggered state at the reporting time point of the measurement report of the first carrier:
the hysteresis waiting time for reporting the measurement report of the second carrier is greater than minimum reporting waiting time.

8. The user equipment according to any one of claims 5 to 7, **characterized in** further comprising:
a receiving module (1105), configured to receive an indication that is sent by a network and indicates that a reporting time point of a measurement report is allowed to be adjusted; and
the adjusting module (1102) is specifically configured to:
adjust the reporting time point of the measurement report of the first carrier and that of the measurement report of the second carrier to the same time point according to the indication indicating that a reporting time point of a measurement report is allowed to be adjusted.

## Patentansprüche

1. Verfahren, durchgeführt durch einen Nutzer eines Mobilfunknetzwerks zum Berichten von Messberichten von mehreren Trägern, **dadurch gekennzeichnet, dass** es Folgendes umfasst:
Bestimmen (401), dass ein erster Träger und ein zweiter Träger in eine Hysterese zum Warten auf Berichten von Messberichten eintreten, und dass ein erwarteter Berichtszeitpunkt eines Messberichts des ersten Trägers früher ist als der eines Messberichts des zweiten Trägers, wobei der erwartete Berichtszeitpunkt ein Zeitpunkt ist, wenn ein Hysterese-Timer abläuft, nachdem in die Hysterese zum Warten auf Berichten von Messberichten eingetreten wird, wobei der Zeitpunkt entsprechend der Hysterese-Wartezeit bestimmt wird;
Anpassen (402) der Berichtszeitpunkte des Messberichts des ersten Trägers und des Messberichts des zweiten Trägers auf einen gleichen Zeitpunkt durch Kürzen der Hysterese-Wartezeit auf Berichten des Messberichts des zweiten Trägers; und
Berichten (403) der Messberichte des ersten Trägers und des zweiten Trägers zum gleichen Zeitpunkt,
**dadurch gekennzeichnet, dass** Kürzen der Hysterese-Wartezeit auf das Berichten des Messberichts des zweiten Trägers Folgendes umfasst:
Setzen eines Auslösers zum Berichten des Messberichts des zweiten Trägers auf einen ausgelösten Zustand zum Berichtszeitpunkt des Messberichts des ersten Trägers, und
wobei das Verfahren ferner Folgendes umfasst:
Anzeigen, wenn der Messbericht des ersten Trägers und der des zweiten Trägers berichtet werden, dass der Messbericht des zweiten Trägers ein Messbericht ist, der vor dem erwarteten Berichtszeitpunkt berichtet wird.

2. Verfahren nach Anspruch 1, das ferner Folgendes umfasst:
Beenden des Zeitablaufs eines Hysterese-Timers des zweiten Trägers, wenn der Messbericht des ersten Trägers und der des zweiten Trägers berichtet sind.

3. Verfahren nach Anspruch 1, wobei die folgende Bedingung für das Setzen des Auslösers für das Berichten des Messberichts des zweiten Trägers auf den ausgelösten Zustand zum Berichtszeitpunkt des Messberichts des ersten Trägers erfüllt ist:
die Hysterese-Wartezeit für Berichten des Messberichts des zweiten Trägers ist größer als die minimale Berichtswartezeit.

4. Verfahren nach einem der Ansprüche 1 bis 3, das ferner Folgendes umfasst:
Empfangen einer von einem Netzwerk gesendeten Anzeige, die anzeigt, dass ein Berichtszeitpunkt eines Messberichts angepasst werden darf; und
wobei das Anpassen der Berichtszeitpunkte des Messberichts des ersten Trägers und des Messberichts des zweiten Trägers auf einen gleichen Zeitpunkt Folgendes umfasst:
Anpassen der Berichtszeitpunkte des Messberichts des ersten Trägers und des Messberichts des zweiten Trägers auf den gleichen Zeitpunkt entsprechend der Anzeige, die anzeigt, dass ein Berichtszeitpunkt eines Messberichts angepasst werden darf.

5. Nutzergerät eines Mobilfunknetzwerks, **dadurch gekennzeichnet, dass** es Folgendes umfasst:
ein Bestimmungsmodul (1101) zum Bestimmen, dass ein erster Träger und ein zweiter Träger in eine Hysterese zum Warten auf Berichten von Messberichten eintreten, und dass ein erwarteter Berichtszeitpunkt eines Messberichts des ersten Trägers früher ist als der eines Messberichts des zweiten Trägers, wobei der erwartete Berichtszeitpunkt ein Zeitpunkt ist, wenn ein Hysterese-Timer abläuft, nachdem in die Hysterese zum Warten auf Berichten von Messberichten eingetreten wird, wobei der Zeitpunkt entsprechend der Hysterese-Wartezeit bestimmt wird;
ein Anpassungsmodul (1102), ausgelegt zum Anpassen der Berichtszeitpunkte des Messberichts des ersten Trägers und des Messberichts des zweiten Trägers auf einen gleichen Zeitpunkt;
ein Berichtsmodul (1103) zum Berichten der Messberichte des ersten Trägers und des zweiten Trägers zum gleichen Zeitpunkt; und
eine Kürzungseinheit (1102b), ausgelegt zum Anpassen der Berichtszeitpunkte des Messberichts des ersten Trägers und des Messberichts des zweiten Trägers auf einen gleichen Zeitpunkt durch Kürzen der Hysterese-Wartezeit auf Berichten des Messberichts des zweiten Trägers,
**dadurch gekennzeichnet, dass** die Kürzungseinheit (1102b) speziell ausgelegt ist zum:
Setzen eines Auslösers zum Berichten des Messberichts des zweiten Trägers auf einen ausgelösten Zustand zum Berichtszeitpunkt des Messberichts des ersten Trägers,
wobei das Berichtsmodul (1103) ferner ausgelegt ist zum:
Anzeigen, wenn der Messbericht des ersten Trägers und der des zweiten Trägers berichtet werden, dass der Messbericht des zweiten Trägers ein Messbericht ist, der vor dem erwarteten Berichtszeitpunkt berichtet wird.

6. Nutzergerät nach Anspruch 5, das ferner Folgendes umfasst:
eine Zeitablaufbeendigungsmodul (1104), ausgelegt zum Beenden des Zeitablaufs des Hysterese-Timers des zweiten Trägers, wenn das Berichtsmodul den Messbericht des ersten Trägers und den des zweiten Trägers berichtet.

7. Nutzergerät nach Anspruch 5, wobei die folgende Bedingung für die Kürzungseinheit zum Setzen eines Auslösers für das Berichten des Messberichts des zweiten Trägers auf einen ausgelösten Zustand zum Berichtszeitpunkt des Messberichts des ersten Trägers erfüllt ist:
die Hysterese-Wartezeit für Berichten des Messberichts des zweiten Trägers ist größer als die minimale Berichtswartezeit.

8. Nutzergerät nach einem der Ansprüche 5 bis 7, **dadurch gekennzeichnet, dass** es ferner Folgendes umfasst:
ein Empfangsmodul (1105), ausgelegt zum Empfangen einer von einem Netzwerk gesendeten Anzeige, die anzeigt, dass ein Berichtszeitpunkt eines Messberichts angepasst werden darf; und
wobei das Anpassungsmodul (1102) spezifisch ausgelegt ist zum:
Anpassen der Berichtszeitpunkte des Messberichts des ersten Trägers und des Messberichts des zweiten Trägers auf den gleichen Zeitpunkt entsprechend der Anzeige, die anzeigt, dass ein Berichtszeitpunkt eines Messberichts angepasst werden darf.

## Revendications

1. Procédé, effectué par un utilisateur d'un réseau cellulaire, pour soumettre des rapports de mesure de porteuses multiples, **caractérisé en ce qu'**il comprend les étapes consistant à :
déterminer (401) qu'une première porteuse et une deuxième porteuse entrent en hystérésis en attendant la soumission de rapports de mesure, et un point temporel de soumission attendu d'un rapport de mesure de la première porteuse est antérieur à celui d'un rapport de mesure de la deuxième porteuse, le point temporel de soumission attendu étant un point temporel auquel expire un temporisateur à hystérésis après l'entrée en hystérésis en attendant la soumission de rapports de mesure, le point temporel étant calculé selon un temps d'attente d'hystérésis ;
ajuster (402) le point temporel de soumission du rapport de mesure de la première porteuse et celui du rapport de mesure de la deuxième porteuse sur un même point temporel en raccourcissant le temps d'attente d'hystérésis pour soumettre le rapport de mesure de la deuxième porteuse ; et
soumettre (403) le rapport de mesure de la première porteuse et celui de la deuxième porteuse au même point temporel,
**caractérisé en ce que** le raccourcissement du temps d'attente d'hystérésis pour la soumission du rapport de mesure de la deuxième porteuse comprend :
régler un déclencheur pour la soumission du rapport de mesure de la deuxième porteuse sur un état déclenché au point temporel de soumission du rapport de mesure de la première porteuse, et
dans lequel le procédé comprend en outre l'étape consistant à :
indiquer, lorsque le rapport de mesure de la première porteuse et celui de la deuxième porteuse sont soumis, que le rapport de mesure de la deuxième porteuse est un rapport de mesure qui est soumis en avance sur le point temporel de soumission attendu.

2. Procédé selon la revendication 1, comprenant en outre l'étape consistant à :
terminer la temporisation d'un temporisateur à hystérésis de la deuxième porteuse lorsque le rapport de mesure de la première porteuse et celui de la deuxième porteuse sont soumis.

3. Procédé selon la revendication 1, dans lequel la condition suivante est remplie pour le réglage du déclencheur pour la soumission du rapport de mesure de la deuxième porteuse sur l'état déclenché au point temporel de soumission du rapport de mesure de la première porteuse :
le temps d'attente d'hystérésis pour soumettre le rapport de mesure de la deuxième porteuse est supérieur au temps d'attente de soumission minimum.

4. Procédé selon l'une quelconque des revendications 1 à 3, comprenant en outre l'étape consistant à :
recevoir une indication qui est envoyée par un réseau et indique qu'un point temporel de soumission d'un rapport de mesure peut être ajusté ; et
l'ajustement du point temporel de soumission du rapport de mesure de la première porteuse et de celui du rapport de mesure de la deuxième porteuse sur un même point temporel comprend :
l'ajustement du point temporel de soumission du rapport de mesure de la première porteuse et de celui du rapport de mesure de la deuxième porteuse sur le même point temporel selon l'indication indiquant qu'un point temporel de soumission d'un rapport de mesure peut être ajusté.

5. Equipement utilisateur d'un réseau cellulaire, **caractérisé en ce qu'**il comprend :
un module de détermination (1101), configuré pour déterminer qu'une première porteuse et une deuxième porteuse entrent en hystérésis en attendant la soumission de rapports de mesure, et un point temporel de soumission attendu d'un rapport de mesure de la première porteuse est antérieur à celui d'un rapport de mesure de la deuxième porteuse, le point temporel de soumission attendu étant un point temporel lorsqu'un temporisateur à hystérésis expire après l'entrée en hystérésis en attendant la soumission de rapports de mesure, le point temporel étant calculé selon le temps d'attente d'hystérésis ;
un module d'ajustement (1102), configuré pour ajuster le point temporel de soumission du rapport de mesure de la première porteuse et celui du rapport de mesure de la deuxième porteuse sur un même point temporel ;
un module de soumission (1103), configuré pour soumettre le rapport de mesure de la première porteuse et celui de la deuxième porteuse au même point temporel ; et
une unité de raccourcissement (1102b), configurée pour ajuster le point temporel de soumission du rapport de mesure de la première porteuse et celui du rapport de mesure de la deuxième porteuse sur le même point temporel en raccourcissant le temps d'attente d'hystérésis pour la soumission du rapport de mesure de la deuxième porteuse,
**caractérisé en ce que** l'unité de raccourcissement (1102b) est spécifiquement configuré pour :
régler un déclencheur pour soumettre le rapport de mesure de la deuxième porteuse sur un état déclenché au point temporel de soumission du rapport de mesure de la première porteuse,
dans lequel le module de soumission (1103) est en outre configuré pour :
indiquer, lorsque le rapport de mesure de la première porteuse et celui de la deuxième porteuse sont soumis, que le rapport de mesure de la deuxième porteuse est un rapport de mesure qui est soumis en avance sur le point temporel de soumission attendu.

6. Equipement utilisateur selon la revendication 5, dans lequel en outre :
un module de terminaison de temporisation (1104), configuré pour terminer la temporisation du temporisateur à hystérésis de la deuxième porteuse lorsque le module de soumission soumet le rapport de mesure de la première porteuse et celui de la deuxième porteuse.

7. Equipement utilisateur selon la revendication 5, dans lequel la condition suivante est remplie pour que l'unité de raccourcissement règle un déclencheur pour soumettre le rapport de mesure de la deuxième porteuse sur un état déclenché au point temporel de soumission du rapport de mesure de la première porteuse :
le temps d'attente d'hystérésis pour soumettre le rapport de mesure de la deuxième porteuse est supérieur au temps d'attente de soumission minimum.

8. Equipement utilisateur selon l'une quelconque des revendications 5 à 7, **caractérisé en ce qu'**il comprend en outre :
un module de réception (1105), configuré pour recevoir une indication qui est envoyée par un réseau et indique qu'un point temporel de soumission d'un rapport de mesure peut être ajusté ; et
le module d'ajustement (1102) est spécifiquement configuré pour :
ajuster le point temporel de soumission du rapport de mesure de la première porteuse et celui du rapport de mesure de la deuxième porteuse sur le même point temporel selon l'indication indiquant qu'un point temporel de soumission d'un rapport de mesure peut être ajusté.
